# NOUVEAU FASCICULE DE BREVET EUROPEEN

(11) **EP 1 314 875 B2**
(45) Date de publication et mention de la décision concernant l'opposition: **15.08.2012**
(45) Mention de la délivrance du brevet: 13.12.2006
(21) Numéro de dépôt: 02292573.9
(22) Date de dépôt: 17.10.2002
(51) Int. Cl.: F02D 23/02, F02D 41/40

(54) **Système de contrôle du fonctionnement d'un moteur diesel de véhicule automobile**
Steuereinrichtung für Kraftfahrzeug-Dieselmotoren
Control system for Diesel engines for automotive vehicles

(30) Priorité: 23.11.2001 FR 0115198
(43) Date de publication de la demande: 28.05.2003
(73) Titulaire: Peugeot Citroën Automobiles SA, 92200 Neuilly sur Seine (FR)
(72) Inventeur: Portalier, Jacques, 92100 Boulogne (FR); Alhinc, Nathalie, 78400 Chatou (FR)
(74) Mandataire: Ménès, Catherine

(56) Documents cités:
- EP-A- 0 978 642
- EP-A- 1 026 385
- EP-A- 1 146 216
- WO-A-99/42718
- WO-A1-01/77507
- DE-A- 19 927 485
- JP-A- 2001 107 736
- US-A- 5 353 763

## Description

La présente invention concerne un système et un procédé de contrôle du fonctionnement d'un moteur Diesel de véhicule automobile.

Le docuemnt DE 199 27 485 A divulgue un système de contrôle du fonctionnement d'un moteur Diesel de véhicule automobile, équipé de moyens d'admission de gaz frais dans celui-ci et de moyens d'alimentation en carburant adaptés pour mettre en oeuvre une phase d'injection de carburant dans au moins certains des cylindres du moteur pendant la phase de détente de ceux-ci, conformément au préambule de la revendication 1.

Ces moteurs Diesel sont équipés de moyens d'admission de gaz frais et de moyens d'alimentation en carburant.

L'utilisation sur ce type de moteurs, de systèmes d'injection de carburant à contrôle électronique, a permis de développer des phases de fonctionnement particulières de ces moyens d'alimentation, telles que par exemple des phases d'injection de carburant dans au moins certains des cylindres du moteur pendant la phase de détente de ceux-ci.

Des injections multiples peuvent ainsi être mises en oeuvre, celles-ci étant également appelées « post-injections » ou « injections tardives », qui sont utilisées notamment en association avec des moyens de dépollution intégrés dans les lignes d'échappement de ces moteurs, comme par exemple des filtres à particules, des pièges à Nox, etc...

En effet, ces moyens de dépollution ont été développés pour réduire les émissions polluantes liées au fonctionnement de ce type de moteurs, par exemple en piégeant les particules.

Ces moyens de dépollution doivent alors être régénérés périodiquement et cette phase de régénération est mise en oeuvre par une combustion des particules, par exemple dans le cas d'un filtre à particules ou un fonctionnement à richesse 1, par exemple dans le cas d'un piège à Nox.

Ainsi par exemple, différents moyens pour déclencher la combustion des particules piégées dans un filtre ont été développés.

C'est ainsi par exemple qu'un additif peut être ajouté au carburant pour se déposer sur ces moyens de dépollution afin de réduire la température de combustion des particules.

Les injections de carburant pendant la phase de détente des cylindres du moteur permettent quant à elles d'augmenter la température des gaz d'échappement pour augmenter la température des particules jusqu'à leur température de combustion.

On conçoit alors que du carburant est injecté en une ou plusieurs fois au cours de la phase de détente du ou de chaque cylindre correspondant après l'injection dite principale.

Or, la combustion de ce carburant, c'est-à-dire le délai d'inflammation et la fraction brûlée, dépend des conditions de température et de pression qui règnent dans le cylindre au moment de l'injection de celui-ci.

Le carburant étant injecté après le point mort haut, la pression dans le cylindre a déjà baissé de manière significative et c'est donc la température qui joue un rôle principal dans le processus de combustion.

La température (et la pression) au moment de l'injection du carburant dépend :
a) de la position de cette injection dans le cycle moteur (et par rapport aux autres injections) ;
b) de l'énergie présente dans le gaz à ce moment et issue de la combustion des injections précédentes :
   1) quantité injectée, position dans le cycle et fraction brûlée ;
   2) quantité de gaz frais admis dans le cylindre au début du cycle ;
   3) température des gaz frais admis dans le cylindre au début du cycle.

Dans les systèmes de contrôle mis en oeuvre jusqu'à présent, les quantités et les positions des différentes injections sont ajustées pour des conditions de pression et de température en entrée du moteur, fixées lors de la mise au point de celui-ci.

C'est ainsi que les conditions a) et b)-1 mentionnées précédemment sont alors fixées.

Ces quantités et positions des injections multiples sont fixées de manière à conserver le même couple moteur pour une demande conducteur donnée entre des modes de fonctionnement avec et sans injection tardive.

Dans les conditions de roulage normales d'un véhicule, les conditions de pression et surtout de température en entrée du moteur, sont influencées par les conditions extérieures, de sorte que le processus de combustion des différentes quantités de carburant injectées s'en trouvent modifiées, ce qui peut provoquer des instabilités de combustion, des surémissions d'hydrocarbures, des variations de couple, etc...

Dans certaines zones de fonctionnement du moteur, ceci peut aller jusqu'à la non-combustion du carburant post-injecté.

Pour résoudre ces problèmes et afin de réduire l'impact des conditions extérieures sur la combustion du carburant injecté en phase de détente des cylindres, des systèmes de contrôle de la température des gaz en entrée du moteur ont été mis en place, ces systèmes comportant par exemple des échangeurs de chaleur et/ou des systèmes de correction des réglages moteur en fonction de la température extérieure par exemple.

Mais ces systèmes sont relativement coûteux et peuvent poser des problèmes d'intégration dans les architectures des véhicules actuels.

Par ailleurs, pour des charges moteur très faibles et même dans des conditions de température et de pression nominales, il n'est pas possible de brûler convenablement le carburant post-injecté en restant à iso-couple, du fait d'une énergie résiduelle dans les gaz d'échappement trop faible après la ou les premières injections.

Le but de l'invention est donc de résoudre ces problèmes.

A cet effet, l'invention a pour objet un système et un procédé de contrôle du fonctionnement d'un moteur Diesel de véhicule automobile, selon la revendication 1 et 11.

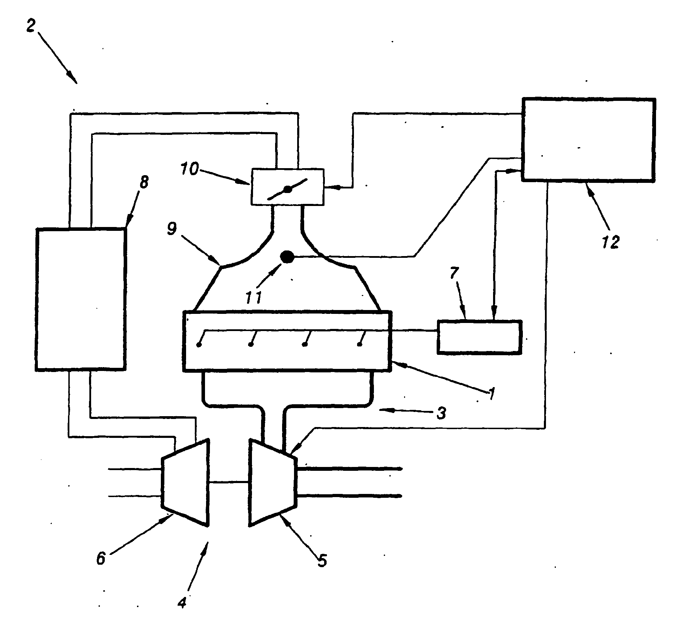

L'invention sera mieux comprise à la lecture de la description qui va suivre, donnée uniquement à titre d'exemple et faite en se référant au dessin annexé qui représente un schéma synoptique illustrant la structure générale d'un système de contrôle selon l'invention.

On reconnaît en effet sur cette figure, un système de contrôle du fonctionnement d'un moteur Diesel de véhicule automobile dans lequel le moteur est désigné par la référence générale 1.

De façon classique, ce moteur est associé en entrée à des moyens d'admission de gaz frais désignés par la référence générale 2 et en sortie, à des moyens d'échappement désignés par la référence générale 3. Des moyens de dépollution tels que par exemple un filtre à particules, un piège à Nox, etc.., peuvent être intégrés dans ces moyens d'échappement.

Dans l'exemple illustré sur cette figure, ce moteur est également associé à un turbocompresseur désigné par la référence générale 4, dont la portion de turbine 5 est associée aux moyens d'échappement du moteur et dont la portion de compresseur 6 est associée aux moyens d'admission de gaz dans celui-ci.

Le moteur est également associé à des moyens d'alimentation en carburant désignés par la référence générale 7 sur cette figure, adaptés pour mettre en oeuvre une phase d'injection de carburant dans au moins certains des cylindres du moteur pendant la phase de détente de ceux-ci.

Cette phase de fonctionnement appelée « phase de post-injection de carburant » est mise en oeuvre lorsqu'il y a lieu par exemple de régénérer les moyens de dépollution intégrés dans la ligne d'échappement de ce moteur, en augmentant la température des gaz d'échappement de celui-ci ou la richesse.

Dans le cas de l'utilisation d'un filtre à particules, un additif peut par ailleurs être ajouté au carburant. Cet additif est destiné à se déposer sur ces moyens de dépollution afin d'abaisser la température de combustion des particules piégées dans ceux-ci.

Bien entendu, d'autres moyens peuvent être envisagés.

Les moyens d'admission des gaz frais dans le moteur comportent de façon classique, un système d'admission d'air désigné par la référence générale 8, un plénum d'admission désigné par la référence générale 9 et des moyens formant vanne désignés par la référence générale 10.

Des capteurs de température et de pression de gaz en entrée du moteur peuvent également être envisagés, de même que des moyens de mesure du débit massique de gaz frais admis.

Ces capteurs sont désignés par la référence générale 11 sur cette figure et permettent de délivrer à des moyens de traitement d'informations désignés par la référence générale 12, des informations correspondantes de température, de pression et de débit.

Ces moyens de traitement d'informations 12 sont en fait adaptés pour piloter le fonctionnement du turbocompresseur, des moyens d'alimentation en carburant et des moyens formant vanne, comme cela sera décrit plus en détail par la suite.

En effet, ces moyens sont adaptés pour piloter les moyens d'admission de gaz dans le moteur, afin de contrôler la masse de gaz admise dans le ou chaque cylindre correspondant afin de contrôler la température dans celui-ci et optimiser la combustion du carburant injecté dans celui-ci, lors de cette phase de détente.

Ceci permet éventuellement de ne pas utiliser d'échangeur de chaleur au niveau des moyens d'admission de gaz dans le moteur, ce qui se traduit par un gain en termes de coût et de facilité d'intégration du système dans un véhicule.

De plus, ceci permet également éventuellement d'assurer une combustion stable du carburant injecté par un système à post-injections multiples même sur des points de fonctionnement à très faible charge du moteur.

Comme cela a été indiqué précédemment, pour contrôler la température des gaz au moment de la ou des injections tardives, l'unité de traitement d'informations 12 est adaptée pour piloter les moyens d'admission afin de contrôler la masse de gaz admise dans le cylindre correspondant.

En effet, pour des quantités et des positions d'injection données, l'énergie disponible pour engendrer la température voulue au moment de la post-injection est la même.

La température des gaz au moment de la post-injection dépend alors de la température et de la masse de gaz admis dans le cylindre au début du cycle.

Ainsi par exemple, pour accroître cette température, on peut décider de réduire la masse de gaz admise par exemple à très faible charge et/ou en ambiance froide dans l'environnement du véhicule; et en utilisant le turbocompresseur.

On peut ainsi piloter la décharge de ce turbocompresseur via la pression de consigne de celui-ci.

Si cette commande n'est pas suffisante, on peut également utiliser une commande des moyens formant vanne 10 en entrée du moteur pour assurer une réduction de la pression des gaz en entrée de celui-ci dans le cas où la première action sur le turbocompresseur n'est pas suffisante.

Par ailleurs, pour réduire la température des gaz dans le cylindre, on peut augmenter la masse des gaz admise en agissant par exemple de manière opposée, sur les actionneurs cités ci-dessus.

Ainsi pour des positions et des quantités de carburant injectées données, on peut ajuster la masse de gaz admis en fonction des conditions extérieures ou de la température en entrée du moteur, afin de maintenir un niveau de température donné au moment de la ou des post-injections, ce qui permet d'optimiser la combustion dans le cylindre.

Dans l'exemple décrit en regard de la figure, on peut constater que l'unité de traitement d'informations 12 est adaptée pour piloter le turbocompresseur et les moyens formant vanne.

Cette unité de traitement d'informations peut recevoir des informations à partir d'un capteur de température de gaz en entrée du moteur, d'un capteur de pression de gaz en entrée du moteur, et/ou d'un capteur de débit massique de gaz frais admis placé par exemple en amont du turbocompresseur.

Ainsi, pour un point de fonctionnement donné du moteur, en régime et en charge, l'unité de traitement d'informations 12 peut être adaptée pour comparer la température des gaz en entrée du moteur, telle que mesurée, à une valeur nominale de température de mise au point du système de post-injection.

En fonction de l'écart correspondant de température, cette unité de traitement d'informations est adaptée pour calculer une correction par exemple cartographiée, de décharge ou de pression de suralimentation afin de contrôler par ordre de priorité :
1) la décharge de la turbine du compresseur ; et
2) les moyens formant vanne, pour atteindre la nouvelle consigne.

Bien entendu, d'autres modes de réalisation peuvent être envisagés et la température en entrée du moteur peut être estimée à partir de la température dans l'environnement du véhicule grâce à un modèle d'estimation de température.

Des variations de pression atmosphérique peuvent également être prises en compte.

Bien entendu, d'autres dispositions peuvent être envisagées.

## Revendications

1. Système de contrôle du fonctionnement d'un moteur Diesel de véhicule automobile, équipé de moyens d'admission de gaz frais (2) dans celui-ci et de moyens (7) d'alimentation en carburant adaptés pour mettre en oeuvre une phase d'injection de carburant dans au moins certains des cylindres du moteur pendant la phase de détente de ceux-ci, **caractérisé en ce qu'**il comporte des moyens de pilotage (12) des moyens d'admission de gaz (2) tels que, pour des positions et des quantités de carburant injectées données, on ajuste, en fonction de la température en entrée du moteur, la masse de gaz admise dans le ou chaque cylindre correspondant afin de maintenir un niveau de température donné au moment de la ou des post-injections et optimiser la combustion du carburant injecté dans celui-ci, lors de cette phase de détente.

2. Système selon la revendication 1, **caractérisé en ce que** les moyens d'admission (2) comprennent un turbocompresseur (4) dont le fonctionnement est commandé par les moyens de pilotage (12) pour contrôler la masse de gaz admise.

3. Système selon la revendication 2, **caractérisé en ce que** les moyens de pilotage sont adaptés pour piloter la décharge du turbo-compresseur via la pression de consigne de celui-ci.

4. Système selon la revendication 1, 2 ou 3, **caractérisé en ce que** les moyens d'admission (2) comprennent des moyens formant vanne (10) d'admission de gaz dont le fonctionnement est commandé par les moyens de pilotage (12) pour contrôler la masse de gaz admis.

5. Système selon l'une quelconque des revendications précédentes, **caractérisé en ce que** les moyens de pilotage (12) sont associés à des moyens de mesure de la température des gaz admis dans le moteur.

6. Système selon l'une quelconque des revendications précédentes, **caractérisé en ce que** les moyens de pilotage (12) sont associés à des moyens de mesure de la pression des gaz admis dans le moteur.

7. Système selon l'une quelconque des revendications précédentes, **caractérisé en ce que** les moyens de pilotage (12) sont associés à des moyens de mesure du débit massique de gaz admis dans le moteur.

8. Système selon la revendication 7, **caractérisé en ce que** les moyens de mesure du débit massique de gaz admis dans le moteur sont placés en amont du turbo-compresseur.

9. Système selon l'une quelconque des revendications précédentes, **caractérisé en ce que** pour un point de fonctionnement donné du moteur, en régime et en charge, les moyens de pilotage (12) sont adaptés pour comparer la température des gaz en entrée du moteur à une valeur nominale pour en déterminer un écart correspondant de température et calculer une correction de pilotage des moyens d'admission de gaz (2) dans le moteur.

10. Système selon les revendications 2 ou 3 et 4 et 9 **caractérisé en ce que** les moyens de pilotage (12) sont adaptés pour contrôler par ordre de priorité :
- la décharge de la turbine du turbo-compresseur (4) et,
- les moyens formant vanne d'admission (10).

11. Procédé de contrôle du fonctionnement d'un moteur Diesel de véhicule automobile, équipé de moyens d'admission de gaz frais (2) dans celui-ci et de moyens (7) d'alimentation en carburant adaptés pour mettre en oeuvre une phase de post-injection de carburant dans au moins certains des cylindres du moteur pendant la phase de détente de ceux-ci, **caractérisé en ce qu'**il comporte une étape de pilotage des moyens d'admission de gaz telle que pour des positions et des quantités de carburant injectées données, on ajuste, en fonction de la température en entrée du moteur, la masse de gaz admise dans le ou chaque cylindre correspondant afin de maintenir un niveau de température donné au moment de la ou des post-injections et optimiser la combustion du carburant injecté dans celui-ci, lors de cette phase de détente.

12. Procédé selon la revendication 11, **caractérisé en ce que** l'étape de pilotage des moyens d'admission de gaz comporte une étape de pilotage du fonctionnement d'un turbo-compresseur (4) associé au moteur.

13. Procédé selon la revendication 11, **caractérisé en ce que** l'étape de pilotage du fonctionnement du turbo-compresseur comporte une étape de pilotage de la décharge de celui-ci via sa pression de consigne.

14. Procédé selon l'une quelconque des revendications 11 à 13, **caractérisé en ce que** l'étape de pilotage des moyens d'admission de gaz comporte une étape de pilotage de moyens formant vanne (10) d'admission de gaz dans le moteur.

15. Procédé selon l'une quelconque des revendications 11 à 14, **caractérisé en ce que** l'étape de pilotage comporte une étape de comparaison, pour un point de fonctionnement donné du moteur en régime et en charge, de la température des gaz en entrée du moteur à une valeur nominale pour en déterminer un écart correspondant de température et une étape de calcul d'une correction de pilotage des moyens d'admission de gaz dans le moteur.

16. Procédé selon la revendication 15, **caractérisé en ce que** l'étape de pilotage consiste par ordre de priorité à piloter la décharge de la turbine du turbo-compresseur puis à piloter les moyens formant vanne d'admission.

## Claims

1. System for controlling the operation of a motor vehicle diesel engine, equipped with means of admitting fresh gas (2) therein and fuel supply means (7) adapted to implement a phase of injection of fuel into at least some of the cylinders of the engine during the expansion phase of these, **characterised in that** it comprises means of controlling (12) the gas admission means (2) such that, for given positions and injected quantities of fuel, the mass of gas admitted into the or each corresponding cylinder is adjusted according the inlet temperature of the engine so as to maintain a given temperature level at the time of the post-injection or post-injections and to optimise the combustion of the fuel injected therein, during this expansion phase.

2. System according to claim 1, **characterised in that** the admission means (2) comprise a turbocompressor (4) the operation of which is controlled by the control means (12) in order to control the mass of gas admitted.

3. System according to claim 2, **characterised in that** the control means are adapted to control the discharge of the turbocompressor via the set pressure thereof.

4. System according to claim 1, 2 or 3, **characterised in that** the admission means (2) comprise means forming a gas admission valve (10) the operation of which is controlled by the control means (12) in order to control the mass of gas admitted.

5. System according to any one of the preceding claims, **characterised in that** the control means (12) are associated with means of measuring the temperature of the gases admitted into the engine.

6. System according to any one of the preceding claims, **characterised in that** the control means (12) are associated with means of measuring the pressure of the gases admitted into the engine.

7. System according to any one of the preceding claims, **characterised in that** the control means (12) are associated with means of measuring the mass flow rate of gas admitted into the engine.

8. System according to claim 7, **characterised in that** the means of measuring the mass flow rate of gas admitted into the engine are placed upstream of the turbocompressor.

9. System according to any one of the preceding claims, **characterised in that**, for a given operating point of the engine, in terms of speed and load, the control means (12) are able to compare the temperature of the gases at the inlet of the engine with a nominal value in order to determine therefrom a corresponding temperature difference and to calculate a correction for controlling the means of admitting gas (2) into the engine.

10. System according to claims 2 or 3 and 4 and 9, **characterised in that** the control means (12) are able to control, in order of priority:
- the discharge of the turbine of the turbocompressor (4), and
- the means forming the inlet valve (10).

11. Method of controlling the functioning of a motor vehicle diesel engine, equipped with means of admitting fresh gas (2) therein and means (7) of supplying fuel able to implement a phase of post-injection of fuel into at least some of the cylinders of the engine during the expansion phase of these, **characterised in that** it comprises a step of controlling the gas admission means such that, for given positions and injected quantities of fuel, the mass of gas admitted into the or each corresponding cylinder is adjusted, according to the temperature at the inlet of the engine, in order to maintain a given temperature level at the time of the post-injection or post-injections and to optimise the combustion of the fuel injected therein, during this expansion phase.

12. Method according to claim 11, **characterised in that** the step of controlling the gas admission means comprises a step of controlling the functioning of a turbocompressor (4) associated with the engine.

13. Method according to claim 11, **characterised in that** the step of controlling the functioning of the turbocompressor comprises a step of controlling the discharge thereof via its set pressure.

14. Method according to any one of claims 11 to 13, **characterised in that** the step of controlling the gas admission means comprises a step of controlling the means forming a valve (10) admitting gas into the engine.

15. Method according to any one of claims 11 to 14, **characterised in that** the control step comprises a step of comparing, for a given operating point of the engine in terms of speed and load, the temperature of the gases at the inlet of the engine with a nominal value in order to determine therefrom a corresponding temperature difference and a step of calculating a correction for controlling the means of admitting gas into the engine.

16. Method according to claim 15, **characterised in that** the control step consists, in order of priority, of controlling the discharge of the turbine of the turbocompressor and then controlling the means forming the inlet valve.

## Patentansprüche

1. Steuersystem für die Funktion eines Kraftfahrzeug-Dieselmotors, der versehen ist mit Mitteln (2), um in ihn Frischgas anzusaugen, und mit Kraftstoffversorgungsmitteln (7), die so beschaffen sind, dass sie eine Phase der Einspritzung von Kraftstoff wenigstens in bestimmte Zylinder des Motors während deren Expansionsphase ausführen, **dadurch gekennzeichnet, dass** es Vorsteuermittel (12) für die Gaseinlassmittel (2) umfasst, dergestalt, dass, für gegebene Positionen und eingespritzte Kraftstoffmengen, die in den oder jeden entsprechenden Zylinder eingelassene Gasmasse in Abhängigkeit von der Temperatur am Einlass des Motors eingestellt wird, um zum Zeitpunkt der Nacheinspritzung(en) ein gegebenes Temperaturniveau aufrechtzuerhalten und um die Verbrennung des in ihn eingespritzten Kraftstoffs in dieser Expansionsphase zu optimieren.

2. System nach Anspruch 1, **dadurch gekennzeichnet, dass** die Einlassmittel (2) einen Turbokompressor (4) umfassen, dessen Funktionsweise durch die Vorsteuermittel (12) gesteuert wird, um die eingelassene Gasmasse zu steuern.

3. System nach Anspruch 2, **dadurch gekennzeichnet, dass** die Vorsteuermittel so beschaffen sind, dass sie die Entladung des Turbokompressors mittels dessen Solldrucks steuern.

4. System nach Anspruch 1, 2 oder 3, **dadurch gekennzeichnet, dass** die Einlassmittel (2) Mittel umfassen, die ein Gaseinlassventil (10) bilden, dessen Funktion durch die Vorsteuermittel (12) gesteuert wird, um die eingelassene Gasmasse zu steuern.

5. System nach einem der vorhergehenden Ansprüche, **dadurch gekennzeichnet, dass** den Vorsteuermitteln (12) Mittel zum Messen der Temperatur der in den Motor eingelassenen Gase zugeordnet sind.

6. System nach einem der vorhergehenden Ansprüche, **dadurch gekennzeichnet, dass** den Vorsteuermitteln (12) Mittel zum Messen des Drucks der in den Motor eingelassenen Gase zugeordnet sind.

7. System nach einem der vorhergehenden Ansprüche, **dadurch gekennzeichnet, dass** den Vorsteuermitteln (12) Mittel zum Messen des Massendurchsatzes der in den Motor eingelassenen Gase zugeordnet sind.

8. System nach Anspruch 7, **dadurch gekennzeichnet, dass** die Massendurchsatz-Messmittel für die in den Motor eingelassenen Gase auf der Einlassseite des Turbokompressors angeordnet sind.

9. System nach einem der vorhergehenden Ansprüche, **dadurch gekennzeichnet, dass** die Vorsteuermittel (12) so beschaffen sind, dass sie für einen gegebenen Betriebspunkt des Motors im laufenden Betrieb und unter Last die Temperatur der Gase am Einlass des Motors mit einem Nennwert vergleichen, um daraus einen entsprechenden Abstand der Temperatur zu bestimmen und um eine Vorsteuerkorrektur für die Mittel (2) zum Einlassen von Gas in den Motor berechnen.

10. System nach den Ansprüchen 2 oder 3 und 4 und 9, **dadurch gekennzeichnet, dass** die Vorsteuermittel (12) so beschaffen sind, dass sie in der Reihenfolge der Prioritäten steuern:
- die Entladung der Turbine des Turbokompressors (4) und
- die das Einlassventil (10) bildenden Mittel.

11. Verfahren zum Steuern des Betriebs eines Kraftfahrzeug-Dieselmotors, der versehen ist mit Mitteln (2), um in ihn Frischgas einzulassen, und mit Mitteln (7) für die Versorgung mit Kraftstoff, um eine Phase der Nacheinspritzung von Kraftstoff wenigstens in bestimmte Zylinder des Motors während deren Expansionsphase auszuführen, **dadurch gekennzeichnet, dass** es einen Schritt des Vorsteuerns der Gaseinlassmittel umfasst, dergestalt, dass, für gegebene Positionen und eingespritzte Kraftstoffmengen, die in den oder jeden entsprechenden Zylinder eingelassene Gasmasse in Abhängigkeit von der Temperatur am Einlass des Motors eingestellt wird, um zum Zeitpunkt der Nacheinspritzung(en) ein gegebenes Temperaturniveau aufrechtzuerhalten und um die Verbrennung von in ihn eingespritzten Kraftstoffs in dieser Expansionsphase zu optimieren.

12. Verfahren nach Anspruch 11, **dadurch gekennzeichnet, dass** der Schritt des Vorsteuerns der Gaseinlassmittel einen Schritt des Vorsteuerns der Funktion eines dem Motor zugeordneten Turbokompressors (4) umfasst.

13. Verfahren nach Anspruch 11, **dadurch gekennzeichnet, dass** der Schritt des Vorsteuerns der Funktion des Turbokompressors einen Schritt des Vorsteuerns seiner Entladung mittels seines Solldrucks umfasst.

14. Verfahren nach einem der Ansprüche 11 bis 13, **dadurch gekennzeichnet, dass** der Schritt des Vorsteuerns der Gaseinlassmittel einen Schritt des Vorsteuerns von Mitteln, die ein Ventil (10) zum Einlassen von Gas in den Motor bilden, umfasst.

15. Verfahren nach einem der Ansprüche 11 bis 14, **dadurch gekennzeichnet, dass** der Vorsteuerschritt einen Schritt umfasst, bei dem die Temperatur der Gase am Einlass des Motors für einen gegebenen Betriebspunkt des Motors im laufenden Betrieb und unter Last mit einem Nennwert verglichen werden, um daraus einen entsprechenden Abstand der Temperatur zu bestimmen, und einen Schritt des Berechnens einer Korrektur der Vorsteuerung der Mittel zum Einlassen von Gas in den Motor umfasst.

16. Verfahren nach Anspruch 15, **dadurch gekennzeichnet, dass** der Vorsteuerschritt darin besteht, in der Reihenfolge der Prioritäten die Entladung der Turbine des Turbokompressors vorzusteuern und dann die das Einlassventil bildenden Mittel vorzusteuern.
